# EUROPEAN PATENT APPLICATION

(11) **EP 4 768 446 A1**
(43) Date of publication of application: **01.07.2026**
(21) Application number: 25212626.3
(22) Date of filing: 31.10.2025
(51) Int. Cl.: C02F 1/42, C02F 1/461

(54) **A WATER SOFTENING SYSTEM WITH REDUCED REGENERATION FREQUENCY**

(30) Priority: 27.12.2024 TR 2024020900
(71) Applicant: Arçelik Anonim Sirketi, 34445 Istanbul (TR)
(72) Inventor: TARKUC, SIMGE, 34445 Istanbul (TR); YESILCUBUK, ALPER, 34445 Istanbul (TR); KAYISDAG, VAROL, 34445 Istanbul (TR); SENGONUL, HUSEYIN, 34445 Istanbul (TR)

(57) **Abstract**

The present invention relates to a water softening module (1) comprising an ion exchange resin (2) for removing the hardness-forming ions from water; an electrolysis cell (3) for producing a regeneration solution; at least one tank (4 or 5) for storing the solutions used in the electrolysis process; a mixing tank (6) for preparing the washing water; and a control unit configured to reduce the regeneration frequency of the ion exchange resin (2) by preparing the washing water through the use of the water passing through the ion exchange resin (2) and/or the water coming directly from the mains and mixing the same with the solution coming from the second tank (5).

## Description

The present invention relates to a water softening module and method which reduce the regeneration frequency of an ion exchange resin.

Water softening systems are widely used to remove hardness-forming ions such as calcium and magnesium from water. The conventional water softening systems typically use ion exchange resins to remove the said hardness ions. As the water passes through the resin bed, calcium and magnesium ions are exchanged with sodium ions, producing softened water. Over time, the resin becomes saturated with hardness ions and must be regenerated to restore the softening capacity.

The conventional regeneration methods comprise washing the resin bed with a concentrated sodium chloride (salt) solution. This process restores the softening ability of the resin by exchanging the accumulated hardness ions with sodium ions. However, the salt-based regeneration has several disadvantages. The salt-based regeneration requires the regular addition of salt, produces a waste brine which may be environmentally problematic when discharged, and may add excess sodium to the softened water.

Recently, electrochemical regeneration methods have been developed which aim to regenerate the ion exchange resins without the use of salt. These systems generally comprise electrolysis to produce regenerant solutions in situ. While avoiding some of the problems associated with the salt-based regeneration, the electrochemical systems may require frequent regeneration cycles to maintain softening performance, which leads to increased energy consumption.

A fundamental challenge for the water softening systems is to ensure a balance between the softening performance and the operational efficiency. Frequent regeneration ensures consistent water quality but increases energy and water usage. Less frequent regeneration conserves resources but may result in hardness ion leakage.

Moreover, the need to produce a regenerant solution in sufficient amount may increase the size and cost of electrochemical systems.

It has been recognized that there is a need for a water softening system with reduced regeneration frequency, which overcomes one or more of these problems.

The aim of the present invention is the realization of a water softening module which is configured to reduce the regeneration frequency of the ion exchange resin by preparing a washing water through mixing the water passing through the ion exchange resin and/or directly the mains water with the solution coming from the intermediate tanks.

Another aim of the present invention is the realization of a water softening module which allows the ion exchange resin to reach the saturation level over a longer period of time, thereby reducing the frequency of regeneration cycles and consequently reducing the energy consumption associated with the electrolysis process.

Yet another aim of the present invention is the realization of a water softening module which provides a consistent softened water source for washing while minimizing the load on the ion exchange resin.

Yet another aim of the present invention is the realization of a water softening module which ensures a balance between the washing effectiveness and the resin life by fine-tuning the water hardness level in the washing water.

Yet another aim of the present invention is the realization of a water softening module which uses separate tanks for different solutions, provides precise control over the electrolysis process, and provides a consistent regenerant solution source for the ion exchange resin.

Yet another aim of the present invention is the realization of a water softening module which ensures flexibility in the management of water quality throughout the system and allow optimization according to specific operational requirements and water conditions.

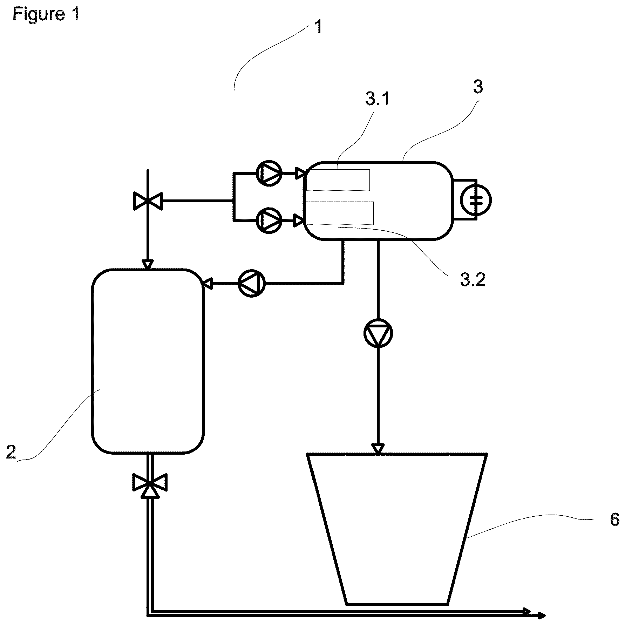

Figure 1: is the schematic view of a water softening module.

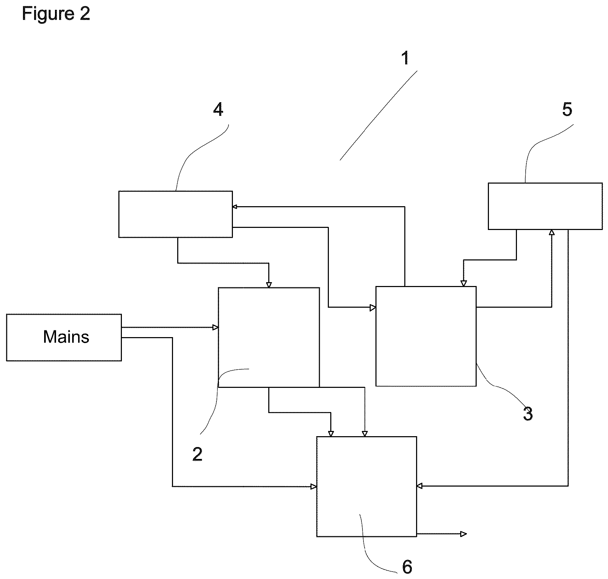

Figure 2: is the schematic view of a water softening module.
   1. Water softening module
   2. Ion exchange resin
   3. Electrolysis cell
      3.1 Anode compartment
      3.2 Cathode compartment
   4. First tank
   5. Second tank
   6. Mixing tank

The water softening system (1) of the present invention comprises at least one ion exchange resin (2), an electrolysis cell (3), a first tank (4), a second tank (5), a mixing tank (6), and a control unit.

In an embodiment of the present invention, in the water softening module (1), the ion exchange resin (2) serves as the primary mechanism for removing the hardness-forming ions from the water. As the water passes through the resin (2), calcium and magnesium ions are exchanged with hydrogen ions, thereby effectively softening the water.

The water softening module (1) comprises an electrolysis cell (3) to produce a regeneration solution. This solution is used to regenerate the ion exchange resin (2) when needed and eliminates the need for salt or other chemical additives typically used in the conventional water softening systems.

In an embodiment of the present invention, the tanks (4, 5) are provided in the water softening module (1) to store the solutions used in the electrolysis process. The said tanks (4, 5) store both the regeneration solution produced by the electrolysis cell (3) and other solutions required for the electrolysis process.

In an embodiment of the present invention, a mixing tank (6) is provided to prepare the washing water. The said mixing tank (6) allows different water sources and solutions to be combined in order to achieve the desired water quality for washing purposes.

In an embodiment of the present invention, the control unit is configured to reduce the regeneration frequency of the ion exchange resin (2). This is realized by preparing the washing water through the use of a combination of the water passing through the ion exchange resin (2), the water coming directly from the mains, and the solutions coming from the first tank (4) and the second tank (5). By carefully controlling the mixing of the said water sources, the water softening module (1) minimizes the load on the ion exchange resin (2) and maintains the desired water quality.

In an embodiment of the present invention, the water softening module (1) operates in a closed loop, which means that during the normal operation the user does not need to add any chemicals or additives. The said closed-loop design contributes to the efficiency and ease of use of the water softening module (1).

In an embodiment of the present invention, by using intelligent mixing capabilities under the direction of the control unit, the water softening module (1) effectively reduces the frequency of regeneration cycles in the water softening module (1). This reduction in regeneration frequency results in reduced energy consumption and increased overall system efficiency.

In an embodiment of the present invention, the water softening module (1) comprises an ion exchange resin (2) to remove the hardness-forming ions from the water. The ion exchange resin (2) is specifically designed to exchange calcium and magnesium ions, which cause water hardness, with hydrogen ions. This exchange process effectively softens the water by reducing the concentration of the hardness-forming ions.

In an embodiment of the present invention, the water softening module (1) uses an H-form ion exchange resin (2). The H-form resin (2) contains hydrogen ions which are exchanged with the calcium and magnesium ions in the water. As the water passes through the resin bed, the hardness-forming ions are captured by the resin and the hydrogen ions are released into the water.

In an embodiment of the present invention, in the water softening module (1), the reduced regeneration frequency of the ion exchange resin (2) has an effect on the performance and economic life of the resin. By reducing the number of regeneration cycles, the resin (2) undergoes less wear and tear caused by the regeneration process. This reduction in physical stress contributes to increasing the economic life of the resin material. Moreover, the reduced regeneration frequency enables the ion exchange resin (2) to operate more efficiently for longer periods of time. The resin (2) maintains the ion exchange capacity for extended periods before regeneration is required, which results in more consistent water softening performance between the regeneration cycles.

In an embodiment of the present invention, the approach of reducing the regeneration frequency with the water softening module (1) also optimizes the utilization of the capacity of the ion exchange resin (2). By carefully managing the water flow passing through the resin (2) and mixing the same with other water sources, the water softening module (1) maximizes the time between the regeneration cycles while maintaining the desired water quality. This optimization leads to an increase in the overall efficiency of the water softening process and potentially to a reduction in operational costs associated with frequent regeneration.

In an embodiment of the present invention, the water softening module (1) comprises an electrolysis cell (3) to produce a regeneration solution for the ion exchange resin (2). The electrolysis cell (3) comprises an anode compartment (3.1) and a cathode compartment (3.2). The regeneration solution is produced in the anode compartment (3.1) of the electrolysis cell (3).

In an embodiment of the present invention, a potential is applied to the electrolysis cell (3) to initiate the production of the regeneration solution. This applied potential causes the electrolysis of water in the cell (3), resulting in the formation of a low-pH solution (pH < 7) in the anode compartment (3.1). This acidic solution serves as the regeneration solution for the ion exchange resin (2).

In an embodiment of the present invention, the reduced regeneration frequency of the ion exchange resin (2) has a significant effect on the operation of the electrolysis cell (3) and the overall energy consumption of the water softening module (1). With less frequent regeneration cycles, the electrolysis cell (3) operates less frequently, which leads to reduced energy use for the production of the regeneration solution.

In an embodiment of the present invention, the electrolysis process involves the dissociation of water molecules into hydrogen and oxygen gases, as well as the generation of hydrogen ions in the anode compartment (3.1). The hydrogen ions contribute to the acidity of the regeneration solution, which is necessary for the effective removal of the hardness-forming ions from the ion exchange resin (2) during the regeneration process.

In an embodiment of the present invention, by reducing the frequency of regeneration cycles, the water softening module (1) minimizes the number of times the electrolysis cell (3) needs to operate. This reduction in the operation of the electrolysis cell (3) results in lower overall energy consumption for the system. The reduced energy use increases the efficiency of the water softening process and potentially results in lower operational costs.

In an embodiment of the present invention, the regeneration solution produced by the electrolysis cell (3) is specifically designed to regenerate the ion exchange resin (2) in H-form. The acidic nature of the solution allows for the effective removal of the calcium and magnesium ions accumulated on the resin (2) during the water softening process and restores the ion exchange capacity of the resin (2).

In an embodiment of the present invention, the water softening module (1) comprises a first tank (4) and a second tank (5) for storing the solutions used in the electrolysis process. The said tanks (4, 5) play a crucial role in the efficient operation of the water softening module (1) by providing a reservoir for the solutions required for the electrolysis cell (3).

In an embodiment of the present invention, the water softening module (1) comprises the first tank (4) for the regeneration solution used in the electrolysis cell (3) and the second tank (5) for the cathode solution. This separation allows the different solutions required for the electrolysis process to be stored and managed independently.

In an embodiment of the present invention, before initiating the electrolysis process, the first tank (4) and the second tank (5) are filled with water. In another embodiment of the present invention, the first tank (4) and the second tank (5) are filled directly with the mains water. In another embodiment of the present invention, the first tank (4) and the second tank (5) are filled with the softened water which has passed through the ion exchange resin (2). This pre-filling step ensures that the necessary volume of solution is available for the electrolysis process.

In an embodiment of the present invention, the first tank (4) and the second tank (5) supply solutions to the anode compartment (3.1) and cathode compartment (3.2) of the electrolysis cell (3). The regeneration solution stored in the first tank (4) is supplied to the anode compartment (3.1), while the cathode solution stored in the second tank (5) is supplied to the cathode compartment (3.2). This arrangement enables the controlled and continuous supply of the necessary solutions to the electrolysis cell (3).

In an embodiment of the present invention, the water softening module (1) operates in a closed loop to supply the solutions stored in the first tank (4) and the second tank (5) to the compartments of the electrolysis cell (3). This closed-loop structure contributes to the efficiency of the system by minimizing waste and reducing the need for frequent replacement of the solutions.

In an embodiment of the present invention, the water softening module (1) comprises a mixing tank (6) for preparing the washing water. The mixing tank (6) serves as a central point for combining water from various sources to achieve the desired water quality for washing purposes. In the water softening module (1), the control unit is configured to manage the preparation of the washing water in the mixing tank (6) by using different methods.

In an embodiment of the present invention, the control unit is configured to prepare the washing water by passing the mains water directly through the ion exchange resin (2) and then delivering the same to the mixing tank (6). This process ensures that the entire volume of water used for washing is softened, since all of the water passes through the ion exchange resin (2) before entering the mixing tank (6).

In an embodiment of the present invention, the water softening module (1) comprises the preparation of the washing water by the control unit by passing a portion of the mains water through the ion exchange resin (2) and mixing the same in the mixing tank (6) with another portion of the mains water directly. This approach allows for a customized water softening level by adjusting the ratio between the softened water and the untreated mains water. The control unit adjusts this ratio based on factors such as the desired water hardness level for specific washing applications or the current capacity of the ion exchange resin (2).

In an embodiment of the present invention, the water softening module (1) comprises a control unit configured to prepare the washing water by combining the water from the mains or the water passing through the ion exchange resin (2) with the cathode solution coming from the second tank (5) in the mixing tank (6). Thus, additional flexibility is provided for water preparation by including the cathode solution, which may have beneficial properties for certain washing applications. The control unit adjusts the proportions of mains water, softened water, and cathode solution to achieve the optimal water composition for washing.

In an embodiment of the present invention, these various methods of preparing the washing water in the mixing tank (6) enable the water softening module (1) to adapt to different water quality requirements while managing the load on the ion exchange resin (2). By selectively using the water passing through the ion exchange resin (2) and mixing the same with other water sources, the water softening module (1) can maintain the desired water quality for washing and potentially reduce the regeneration frequency of the ion exchange resin (2).

In an embodiment of the present invention, the water softening module (1) comprises a control unit which is configured to reduce the regeneration frequency of the ion exchange resin (2). This control unit manages the preparation of the washing water to optimize the performance of the resin (2) and the overall system efficiency.

In an embodiment of the present invention, the control unit reduces the regeneration frequency by strategically preparing the washing water using a combination of water sources. These sources may include the water passing through the ion exchange resin (2), the water coming directly from the mains, and the solutions coming from the first tank (4) or the second tank (5). By carefully controlling the mixing ratios of the said water sources, the control unit minimizes the load on the ion exchange resin (2) and maintains the desired water quality for washing.

In an embodiment of the present invention, to optimize the performance of the resin (2), the control unit may use various strategies for preparing the washing water. In an embodiment of the present invention, the control unit passes the mains water through the ion exchange resin (2) before directing the same to the mixing tank (6). In another embodiment of the present invention, the control unit splits the mains water flow and passes only a portion thereof through the ion exchange resin (2) to be then combined with the untreated mains water in the mixing tank (6). Additionally, the control unit incorporates the cathode solution from the second tank (5) into the washing water preparation process.

In an embodiment of the present invention, by reducing the regeneration frequency, the control unit influences the operation of the electrolysis cell (3). When the regeneration frequency increases, the electrolysis cell (3) is operated more frequently to produce the necessary regeneration solution. However, by reducing the regeneration frequency, the control unit minimizes the operation of the electrolysis cell (3), which may result in energy savings and enhanced system efficiency.

In an embodiment of the present invention, the water softening module (1) may comprise a computer program product which includes instructions that, when executed on a processor of the module (1), cause the processor to perform the method of operating the water softening module. This computer program product enables the control unit to execute the algorithms required for water preparation management, monitoring of resin (2) performance, and optimization of the regeneration frequency.

In an embodiment of the present invention, by means of these control strategies, the water softening module (1) maintains the effective water softening performance while potentially reducing energy consumption and extending the economic life of system components.

In an embodiment of the present invention, the mixing tank (6), which is used to prepare the washing water in the water softening module (1), serves as a central point for combining water from various sources to achieve the desired water quality for washing purposes. The control unit of the water softening module (1) manages the preparation of the washing water in the mixing tank (6) by using different methods.

In an embodiment of the present invention, the control unit prepares the washing water by passing the mains water directly through the ion exchange resin (2) and then delivering the same to the mixing tank (6). This process ensures that the entire volume of water used for washing is softened, since all of the water passes through the ion exchange resin (2) before entering the mixing tank (6).

In an embodiment of the present invention, the water softening module (1) comprises the preparation of the washing water by the control unit by passing a portion of the mains water through the ion exchange resin (2) and mixing the same in the mixing tank (6) with another portion of the mains water directly. Thus, it is ensured to achieve a customized water softening level by adjusting the ratio between the softened water and the untreated mains water. The control unit adjusts this ratio based on factors such as the desired water hardness level for specific washing applications or the current capacity of the ion exchange resin (2).

In an embodiment of the present invention, the water softening module (1) comprises the control unit which prepares the washing water by combining the water from the mains or the water passing through the ion exchange resin (2) with the cathode solution coming from the second tank (5) in the mixing tank (6). This method provides additional flexibility for water preparation by including the cathode solution, which may have beneficial properties for certain washing applications. The control unit can adjust the proportions of mains water, softened water, and cathode solution to achieve the optimal water composition for washing.

In an embodiment of the present invention, these various methods of preparing the washing water in the mixing tank (6) enable the water softening module (1) to adapt to different water quality requirements while managing the load on the ion exchange resin (2). By selectively using the water passing through the ion exchange resin (2) and mixing the same with other water sources, the system maintains the desired water quality for washing and potentially reduces the regeneration frequency of the ion exchange resin (2).

In an embodiment of the present invention, the water softening module (1) operates in a closed loop which requires minimal user intervention for maintenance and operation. The water softening module (1) starts by filling the first tank (4) and/or the second tank (5) with water. This water may be taken directly from the mains or may be the softened water which has passed through the ion exchange resin (2). The selection of the water source to be used for filling the intermediate tanks may depend on factors such as the current capacity of the ion exchange resin (2) and the desired quality of the regeneration solution.

In an embodiment of the present invention, after the first tank (4) and/or the second tank (5) are filled to the appropriate level, the electrolysis process is initiated. To initiate electrolysis, a potential is applied to the electrolysis cell (3). This applied potential causes the electrolysis of the water in the cell (3), resulting in the production of a regeneration solution in the anode compartment (3.1) and a cathode solution in the cathode compartment (3.2).

In an embodiment of the present invention, the pH of the regeneration solution produced in the anode compartment (3.1) is less than 7, in other words, it is acidic. This acidic regeneration solution is specifically designed to regenerate the ion exchange resin (2) in H-form. The low pH of the regeneration solution allows for the effective removal of the calcium and magnesium ions accumulated on the resin (2) during the water softening process and restores the ion exchange capacity of the resin (2).

In an embodiment of the present invention, during operation, the water softening module (1) supplies solutions from the intermediate first tank (4) and second tank (5) to the anode compartment (3.1) and the cathode compartment (3.2) of the electrolysis cell (3). The regeneration solution is supplied to the anode compartment (3.1), while the cathode solution is supplied to the cathode compartment (3.2). This arrangement guarantees the controlled and continuous supply of the necessary solutions to the electrolysis cell (3).

In an embodiment of the present invention, the closed-loop design of the water softening module (1) contributes to the efficiency of the system by minimizing waste and reducing the need for frequent replacement of the solutions. The water softening module (1) continuously recirculates and reuses the solutions stored in the first tank (4) and/or the second tank (5), thereby optimizing resource usage and reducing operating costs.

The operation of the water softening module (1) primarily includes monitoring the performance of the ion exchange resin (2) and ensuring the proper functioning of the electrolysis cell (3). The control unit may be programmed to automatically initiate regeneration cycles based on predetermined criteria such as the volume of processed water or the measured hardness of the processed water. This automatic approach minimizes the need for manual intervention and maintains consistent water quality.

In an embodiment of the present invention, the water softening module (1) is adapted to washing machines and washing-drying machines.

In an embodiment of the present invention, there is a water softening module (1) which is positioned anywhere on the body of washing and washing-drying machines.

In an embodiment of the present invention, the water softening module (1), as described above, is provided in a washing compartment, detergent compartment, any area between the body and casing, or on the surface of the door facing the washing compartment in the washing and washing-drying machines.

The water softening module (1) operating method of the present invention comprises the steps of:
- removing the hardness-forming ions from water using an ion exchange resin (2);
- producing a regeneration solution using an electrolysis cell (3);
- storing the solutions used in the electrolysis process in at least one tank (4 or 5);
- preparing the washing water in a mixing tank (6); and
- preparing the washing water by using the water passing through the ion exchange resin (2) and/or water coming directly from the mains and mixing the same with the solution coming from at least one tank (4 or 5), thereby reducing the regeneration frequency of the ion exchange resin (2).

The water softening module (1) operating method of the present invention further comprises the step of preparing the washing water by passing the mains water directly through the ion exchange resin (2) and then delivering the same to the mixing tank (6).

The water softening module (1) operating method of the present invention further comprises the step of preparing the washing water by passing a portion of the mains water through the ion exchange resin (2) to be mixed with another portion of the mains water directly in the mixing tank (6).

The water softening module (1) operating method of the present invention further comprises the step of preparing the washing water by combining the water from the mains or the water passing through the ion exchange resin (2) with the cathode solution from the second tank (5) in the mixing tank (6).

The water softening module (1) operating method of the present invention further comprises using a first tank (4) for the regeneration solution used in the electrolysis cell (3) and a second tank (5) for the cathode solution.

The water softening module (1) operating method of the present invention further comprises the step of filling the first tank (4) and/or the second tank (5) directly with the mains water or with the softened water which has passed through the ion exchange resin (2), prior to initiating the electrolysis process.

The water softening module (1) operating method of the present invention further comprises the step of applying a potential to the electrolysis cell (3) to initiate the production of the regeneration solution.

The water softening module (1) operating method of the present invention further comprises the step of supplying the solutions from the first tank (4) to the anode compartment (3.1) of the electrolysis cell (3) and from the second tank (5) to the cathode compartment (3.2).

The water softening module (1) operating method of the present invention further comprises the step of using the regeneration solution, having a pH of less than 7, to regenerate the ion exchange resin (2) in H-form.

## Claims

1. A water softening module (1) **characterized by** an ion exchange resin (2) for removing the hardness-forming ions from water; an electrolysis cell (3) for producing a regeneration solution; at least one tank (4 or 5) for storing the solutions used in the electrolysis process; a mixing tank (6) for preparing the washing water; and a control unit configured to reduce the regeneration frequency of the ion exchange resin (2) by preparing the washing water through the use of the water passing through the ion exchange resin (2) and/or the water coming directly from the mains and mixing the same with the solution coming from the second tank (5).

2. A water softening module (1) as in Claim 1, **characterized by** the control unit which is configured to prepare the washing water by passing the mains water directly through the ion exchange resin (2) and then delivering the same to the mixing tank (6).

3. A water softening module (1) as in Claim 1, **characterized by** the control unit which is configured to prepare the washing water by passing a portion of the mains water through the ion exchange resin (2) and mixing the same in the mixing tank (6) with another portion of the mains water directly.

4. A water softening module (1) as in any one of the above claims, **characterized by** the control unit which is configured to prepare the washing water by combining the water from the mains or the water passing through the ion exchange resin (2) with the cathode solution coming from at least one tank (4 or 5)in the mixing tank (6).

5. A water softening module (1) as in any one of the above claims, **characterized by** the first tank (4) for the regeneration solution used in the electrolysis cell (3) and the second tank (5) for the cathode solution.

6. A water softening module (1) operating method **characterized by** the steps of:
- removing the hardness-forming ions from water using an ion exchange resin (2);
- producing a regeneration solution using an electrolysis cell (3);
- storing the solutions used in the electrolysis process in at least one tank (4 or 5);
- preparing the washing water in a mixing tank (6); and
- preparing the washing water by using the water passing through the ion exchange resin (2) and/or water coming directly from the mains and mixing the same with the solution coming from at least one tank (4 or 5), thereby reducing the regeneration frequency of the ion exchange resin (2).

7. A water softening module (1) operating method as in Claim 6, **characterized by** the step of preparing the washing water by passing the mains water directly through the ion exchange resin (2) and then delivering the same to the mixing tank (6).

8. A water softening module (1) operating method as in Claim 6, **characterized by** the step of preparing the washing water by passing a portion of the mains water through the ion exchange resin (2) to be mixed with another portion of the mains water directly in the mixing tank (6).

9. A water softening module (1) operating method as in any one of Claims 6 to 8, **characterized by** the step of preparing the washing water by combining the water from the mains or the water passing through the ion exchange resin (2) with the cathode solution from at least one tank (4 or 5) in the mixing tank (6).

10. A water softening module (1) operating method as in any one of the above claims, **characterized by** a first tank (4) for the regeneration solution used in the electrolysis cell (3) and a second tank (5) for the cathode solution.

11. A water softening module (1) operating method as in any one of Claims 6 to 10, **characterized by** the step of filling the first tank (4) and/or the second tank (5) directly with the mains water or with the softened water which has passed through the ion exchange resin (2), prior to initiating the electrolysis process.

12. A water softening module (1) operating method as in any one of Claims 6 to 11, **characterized by** the step of applying a potential to the electrolysis cell (3) to initiate the production of the regeneration solution.

13. A water softening module (1) operating method as in any one of Claims 6 to 12, **characterized by** the step of supplying the solutions from the first tank (4) to the anode compartment (3.1) of the electrolysis cell (3) and from the second tank (5) to the cathode compartment (3.2).

14. A water softening module (1) operating method as in any one of Claims 6 to 13, **characterized by** the step of using the regeneration solution, having a pH of less than 7, to regenerate the ion exchange resin (2) in H-form.

15. A washing or washing-drying machine, **characterized by** a water softening module (1) as in any one of Claims 1 to 5, positioned in a washing compartment, in the detergent compartment, in any area between the body and the casing, or on the surface of the door facing the washing compartment.
